# DEMANDE DE BREVET EUROPEEN

(11) **EP 4 086 101 A1**
(43) Date de publication de la demande: **09.11.2022**
(21) Numéro de dépôt: 22171375.3
(22) Date de dépôt: 03.05.2022
(51) Int. Cl.: B60K 35/00, B60K 37/06, B60Q 3/14, B60Q 3/54, B60Q 3/62, B60R 13/02

(54) **ELÉMENT DE GARNISSAGE COMPRENANT UNE ZONE D'AFFICHAGE INTÉGRÉE**

(30) Priorité: 04.05.2021 FR 2104687
(71) Demandeur: Faurecia Clarion Electronics Europe, 75012 Paris (FR)
(72) Inventeur: DA SILVA, Edouard, 95220 HERBLAY (FR); FEILLEUX, Romain, 93800 EPINAY SUR SEINE (FR)
(74) Mandataire: Lavoix

(57) **Abrégé**

L'élément de garnissage (1) comprend une zone d'affichage (20) définie par un dispositif d'affichage (6), et une pièce de bord (4) comprenant une zone périphérique (14) s'étendant autour d'au moins une partie de la zone d'affichage (20), ladite zone périphérique (14) étant au moins en partie translucide, ladite zone d'affichage (20) et ladite zone périphérique (14) formant au moins une partie d'une surface extérieure de l'élément de garnissage, l'élément de garnissage comprenant en outre un dispositif d'éclairage (8) agencé pour éclairer le dispositif d'affichage (6) afin d'afficher des images sur la zone d'affichage (20).

Le dispositif d'éclairage (8) comprend une nappe lumineuse (28) s'étendant au moins en regard de la zone d'affichage (20) et de la zone périphérique (14) de la pièce de bord (4).

## Description

La présente invention concerne un élément de garnissage du type comprenant une zone d'affichage définie par un dispositif d'affichage, et une pièce de bord comprenant une zone périphérique s'étendant autour d'au moins une partie de la zone d'affichage, ladite zone périphérique étant au moins en partie translucide, ladite zone d'affichage et ladite zone périphérique formant au moins une partie d'une surface extérieure de l'élément de garnissage, l'élément de garnissage comprenant en outre un dispositif d'éclairage agencé pour éclairer le dispositif d'affichage afin d'afficher des images sur la zone d'affichage.

L'élément de garnissage selon l'invention est par exemple un module d'affichage comprenant un dispositif d'affichage ou une pièce de décoration comprenant un dispositif d'affichage. L'invention s'applique par exemple à un élément de garnissage de véhicule.

Il est connu d'intégrer un dispositif d'affichage dans un élément de garnissage, tel qu'une planche de bord, une console centrale, un siège, un panneau de porte ou autre, afin d'afficher des informations à destination des passagers du véhicule et/ou un contenu audiovisuel.

Pour ce faire, le boîtier du dispositif d'affichage s'étend par exemple dans le corps de l'élément de garnissage et la zone d'affichage, par exemple formée sur une vitre ou lentille transparente et sur laquelle les images du dispositif d'affichage sont affichées, s'étend par exemple sensiblement dans la continuité de la surface externe du corps, par exemple formée sur une couche de revêtement ou une pièce de bord, afin que l'élément de garnissage présente une surface extérieure sensiblement continue et ininterrompue présentant un aspect satisfaisant.

Cependant, afin d'afficher un contenu présentant des dimensions satisfaisantes pour être confortablement visibles par les passagers du véhicule, la zone d'affichage et le boîtier du dispositif d'affichage doivent présenter des dimensions importantes, ce qui augmente l'encombrement du dispositif d'affichage dans l'élément de garnissage, potentiellement au détriment d'autres éléments fonctionnels, et augmente le coût de l'élément de garnissage intégrant le dispositif d'affichage.

En outre, bien que la zone d'affichage s'étende dans la continuité du reste de la surface extérieure de l'élément de garnissage, la transition entre la zone d'affichage et la zone de la surface extérieure s'étendant autour de la zone d'affichage reste visible, ce qui nuit à l'aspect de l'élément de garnissage et réduit l'impression d'intégration du dispositif d'affichage dans l'élément de garnissage.

L'un des buts de l'invention est de pallier ces inconvénients en proposant un élément de garnissage comprenant un dispositif d'affichage intégré dont l'encombrement et le coût sont réduits et présentant un aspect particulièrement favorable.

A cet effet, l'invention concerne un dispositif d'affichage du type précité, dans lequel le dispositif d'éclairage comprend une nappe lumineuse s'étendant au moins en regard de la zone d'affichage et de la zone périphérique de la pièce de bord.

En prévoyant une nappe lumineuse s'étendant en dehors de la zone d'affichage, il est possible d'illuminer avec cette même nappe la zone de la pièce de bord qui s'étend autour de la zone d'affichage. Cette illumination permet d'augmenter artificiellement la zone d'affichage du dispositif d'affichage et ainsi de présenter un contenu présentant des dimensions satisfaisantes pour les passagers du véhicule tout en réduisant la taille de la zone d'affichage et du dispositif d'affichage dans son ensemble. En outre, la lumière émise par la nappe lumineuse peut être agencée pour rendre sensiblement invisible à l'œil nu la transition entre la zone d'affichage et la pièce de bord.

L'élément de garnissage selon l'invention peut en outre comprendre une ou plusieurs des caractéristiques suivantes, considérées seules ou selon toute combinaison techniquement envisageable :
- la nappe lumineuse est commandée par une unité de contrôle adaptée pour commander ladite nappe lumineuse pour qu'une première zone de ladite nappe lumineuse, s'étendant sensiblement en regard de la zone d'affichage, émette un premier signal lumineux et qu'une deuxième zone de ladite nappe lumineuse, s'étendant en regard de la zone périphérique, émette un deuxième signal lumineux différent du premier signal lumineux, ledit deuxième signal lumineux présentant une première luminosité, faible ou nulle, dans un état de repos de ladite deuxième zone lumineuse, et une deuxième luminosité, supérieure à la première luminosité, lorsque l'unité de contrôle active ladite deuxième zone dans un état activé ;
- la zone d'affichage comprend un élément transparent comprenant une surface externe et une surface interne, opposée à la surface externe et tournée vers le dispositif d'affichage, la surface externe de l'élément transparent s'étendant sensiblement dans le même plan que la zone périphérique de la pièce de bord, l'élément de garnissage présentant une surface extérieure sensiblement continue et ininterrompue au niveau de la transition entre la zone d'affichage et la zone périphérique ;
- la pièce de bord délimite une ouverture recevant l'élément transparent ;
- la nappe lumineuse est agencée pour émettre une lumière rendant sensiblement invisible à l'œil nu la transition entre la surface d'affichage et la zone périphérique depuis l'extérieur de l'élément de garnissage lorsque la nappe lumineuse est activée ;
- l'élément transparent et la pièce de bord sont réalisés dans des matériaux différents ;
- la zone périphérique et/ou la zone d'affichage comprennent au moins une zone de signalement formant un pictogramme et/ou désignant une zone activable par contact avec ladite zone activable ;
- la pièce de bord comprend au moins un film capacitif s'étendant en regard d'au moins la zone périphérique, ledit film capacitif définissant au moins un bouton tactile sur ladite zone périphérique, ledit bouton tactile n'étant actionnable que lorsque ladite zone périphérique est éclairée par la nappe lumineuse ;
- le dispositif d'affichage comprend un écran s'étendant en regard de la zone d'affichage, ledit écran étant maintenu par un support comprenant au moins une partie s'étendant en regard de la zone périphérique, la nappe lumineuse s'étendant sur l'envers dudit écran et de ladite partie du support de sorte que la lumière émise par ladite nappe lumineuse traverse l'écran et la partie du support avant d'atteindre la surface extérieure de l'élément de garnissage ;
- le dispositif d'éclairage comprend au moins un guide de lumière s'étendant en saillie de la nappe lumineuse et amenant la lumière émise par ladite nappe lumineuse sur au moins une partie de la zone périphérique de la pièce de bord ;
- la nappe lumineuse comprend une pluralité de diodes électroluminescentes formant une matrice de diodes électroluminescentes définissant plusieurs sous matrices de diodes, chaque sous-matrice étant activable indépendamment des autres sous-matrices ;
- la nappe lumineuse est flexible et déformable de sorte à pouvoir épouser la forme de l'élément de garnissage ;
- le dispositif d'affichage et le dispositif d'éclairage sont pilotés par une même unité de contrôle ;
- l'élément de garnissage est un module d'affichage.

D'autres aspects et avantages de l'invention apparaîtront à la lecture de la description qui suit, donnée à titre d'exemple et faite en référence aux dessins annexés, dans lesquels :
[Fig 1] - la Fig. 1 est une représentation schématique en perspective d'un élément de garnissage selon l'invention montrant la surface extérieure de l'élément de garnissage,
[Fig 2] - la Fig. 2 est une représentation schématique en coupe de l'élément de garnissage selon l'axe II-II de la Fig. 1, et
[Fig 3] - la Fig. 3 est une représentation schématique en coupe d'un détail d'un l'élément de garnissage selon un mode de réalisation de l'invention.

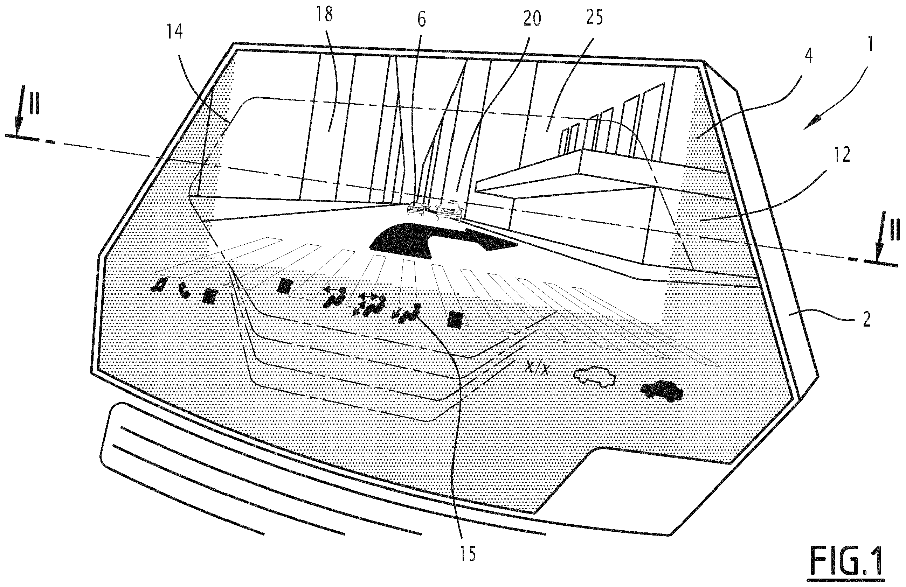

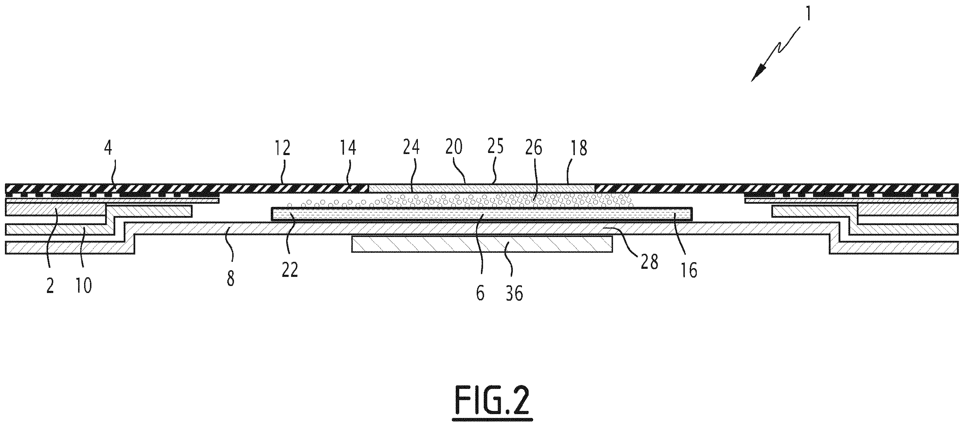

En référence aux Figs. 1 et 2, on décrit un élément de garnissage 1 de véhicule comprenant principalement un corps 2 revêtu d'une pièce de bord 4, un dispositif d'affichage 6 et un dispositif d'éclairage 8. Un tel élément de garnissage 1 forme par exemple une planche de bord, une console centrale, un siège, un panneau de porte ou autre, installé dans l'habitacle du véhicule. En variante, l'élément de garnissage 1 selon l'invention forme un module d'affichage. qui peut être intégré sur un autre élément de garnissage, tel qu'une planche de bord, etc. Un tel module d'affichage forme par exemple un produit fini qui peut être utilisé en tant qu'unité indépendante, par exemple pour être disposée dans un véhicule ou la pièce d'un bâtiment ou encore utilisée de façon nomade. Ainsi, comme représenté sur la Fig. 1, le module d'affichage peut être installé sur une planche de bord.

Le corps 2 définit la forme de l'élément de garnissage et confère à celui-ci ses caractéristiques mécaniques, en dehors du dispositif d'affichage. Le corps 2 peut être réalisé en tout matériau approprié, tel qu'un matériau plastique rigide, une mousse ou autre. Le corps 2 comprend au moins une ouverture pour loger le dispositif d'affichage 6. Autour de l'ouverture, le corps 2 forme un support 10 destiné à maintenir une partie du dispositif d'affichage 6, comme cela sera décrit ultérieurement. Selon un mode de réalisation, le support 10 est formé par une armature s'étendant dans le corps 2, notamment lorsque celui-ci est réalisé en mousse.

La partie du corps 2 destinée à être tournée vers l'habitacle du véhicule est au moins en partie recouverte par une pièce de bord 4 qui comprend également une ouverture s'étendant en regard d'au moins une partie de l'ouverture du corps 2, pour le passage d'une partie du dispositif d'affichage 6, comme cela sera décrit ultérieurement. La pièce de bord 4 présente une surface externe 12, opposée à la surface de la pièce de bord 4 qui est appliquée sur le corps, formant une partie de la surface extérieure de l'élément de garnissage 1. Par surface extérieure, on entend ici la surface qui est visible depuis l'extérieur de l'élément de garnissage 1, c'est-à-dire visible par les passagers du véhicule. Ainsi, la pièce de bord 4 définit l'aspect d'au moins une partie de l'élément de garnissage 1 et la pièce de bord 4 peut être réalisée en tout matériau adapté pour conférer un aspect satisfaisant à l'élément de garnissage 1. Une telle pièce de bord 4 peut être formée d'une couche de revêtement revêtant le corps 2. Selon un autre mode de réalisation, la pièce de bord 4 peut être réalisée d'une seule pièce avec le corps 2 de l'élément de garnissage 1.

Le ou les bords de l'ouverture de la pièce de bord 4 sont désignés sous le terme de zone périphérique 14 de la pièce de bord 4. En d'autres termes, la zone périphérique 14 de la pièce de bord 4 correspond à la partie de la pièce de bord 4 qui entoure au moins une partie d'une zone d'affichage définie par un dispositif d'affichage 6, comme cela sera décrit plus en détail ultérieurement. Au moins la zone périphérique 14 de la pièce de bord 4 est translucide, c'est-à-dire qu'elle laisse passer la lumière provenant du côté du corps 2 jusqu'à la surface externe 12 de la zone périphérique. Par translucide, on entend un taux de transmission de la lumière sensiblement compris entre 5% et 100%, un taux de transmission de la lumière inférieur à 5% correspondant à une partie opaque ne laissant pas passer la lumière. Ainsi, au moins la zone périphérique 14 de la pièce de bord 4 laisse passer la lumière provenant de l'intérieur de l'élément de garnissage 1 pour que cette lumière soit visible sur la surface externe 12 de la zone périphérique 14. Selon un mode de réalisation, l'ensemble de la pièce de bord 4 est translucide et les zones de la pièce de bord ne devant pas laisser passer la lumière sont alors installées sur une partie opaque, par exemple formée par le cors 2. Selon un mode de réalisation, la pièce de bord 4 est formée par une peau en matériau synthétique translucide.

Selon un mode de réalisation, la zone périphérique 14 peut comprendre des zones opaques, par exemple en prévoyant un masque s'étendant sur la surface intérieure de la zone périphérique, afin de définir un ou plusieurs motifs laissant passer la lumière, par exemple pour former des pictogrammes ou autre. Comme représenté sur la Fig. 1, de tels motifs permettent de former au moins une zone de signalement 15, liée à une ou plusieurs fonctions du véhicule ou d'un appareil connecté au véhicule, sur la surface externe 12 de la zone périphérique 14 comme cela sera décrit plus en détail ultérieurement.

Le support 10 du corps 2 s'étend au moins en partie en regard de la zone périphérique 14 de la pièce de bord 4 de sorte à pouvoir recevoir le dispositif d'affichage 8 qui s'étend dans l'ouverture pratiquée dans le corps 2, comme cela va à présent être décrit.

Le dispositif d'affichage 8 comprend au moins un écran 16 s'étendant en regard d'un élément transparent 18 formant une zone d'affichage 20.

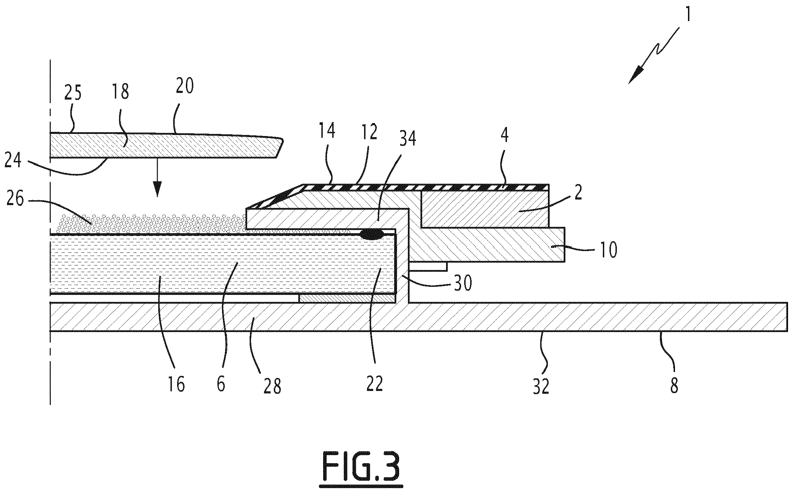

L'écran 16 est par exemple formé par une dalle à cristaux liquides agencés pour former des images lorsque la dalle est éclairée et pilotée, comme cela sera décrit ultérieurement. L'écran 16 laisse donc passer la lumière, notamment d'une face tournée vers l'intérieur de l'élément de garnissage à une face tournée vers l'extérieur de l'élément de garnissage et s'étendant en regard de l'ouverture de la pièce de bord 4. Selon un mode de réalisation plus particulièrement visible sur la Fig. 3, l'écran 16 comprend une bordure opaque 22 formant une partie technique de l'écran 16 là où est assurée la connectique de l'écran 16 par exemple. Cette bordure opaque 22 ne laisse pas passer la lumière comme le reste de l'écran 16. On notera que l'écran 16 désigne ici uniquement la dalle à cristaux liquides et non le dispositif d'éclairage de la dalle, comme cela peut être habituellement le cas. Selon un mode de réalisation, l'écran 16 est un écran tactile avec lequel un utilisateur peut interagir par contact avec la surface d'affichage 20. Pour ce faire, un film capacitif (non représenté) est par exemple appliqué sur ou au voisinage de l'écran 16, par exemple entre l'écran 16 et l'élément transparent 18, de façon connue en soi.

L'écran 16 s'étend dans l'ouverture pratiquée dans le corps 2, en regard de l'ouverture de la pièce de bord 4, et est par exemple monté sur le support 10 du corps 2 qui assure le maintien de l'écran 16 dans le corps 2.

L'élément transparent 18 est par exemple formé par une vitre ou une lentille réalisée en matériau plastique, en verre ou autre. Selon un mode de réalisation, l'élément transparent 18 est réalisé en un matériau différent de celui de la pièce de bord 4. Comme représenté sur les Figs. 2 et 3, l'élément transparent 18 s'étend dans l'ouverture de la pièce de bord 4 en regard de l'écran 16 et est agencé pour les images générées par l'écran 16 soient affichées de façon nette sur la zone d'affichage 20. A cet effet, l'élément transparent 18 comprend une surface interne 24 tournée vers l'écran 16 et une surface externe 25, opposée à la surface interne 24 et tournée vers l'extérieur de l'élément de garnissage 1 et formant la zone d'affichage 20. La lumière traversant l'écran 16 est ainsi transmise vers la surface interne 24 de l'élément transparent 18 et de la surface interne 24 à la surface externe 25 sur laquelle les images émises par l'écran 16 sont affichées. Pour assurer une bonne transmission de la lumière entre l'écran 16 et l'élément transparent 18, un matériau de transmission optique 26, tel qu'une colle optique, peut être prévu entre la face de l'écran 16 tournée vers l'élément transparent 18 et la surface interne 24 de l'élément transparent 18, comme représenté sur la Fig. 2. Une telle colle optique assure en outre une fixation entre l'écran 16 et l'élément transparent 18. Pour un écran tactile 16, on notera que le film capacitif peut également s'étendre sur la face interne 24 de l'élément transparent 18. On notera qu'un tel film capacitif peut également être prévu pour former une ou plusieurs surfaces tactiles sur la surface externe 12 de la zone périphérique 14 par exemple en regard d'une ou plusieurs zones de signalement 15. En variante, des films capacitifs différents sont prévus pour rendre la zone d'affichage 20 tactile et pour rendre la zone périphérique 14 tactile.

Selon un mode de réalisation avantageux, la zone d'affichage 20 s'étend sensiblement dans le même plan que la zone périphérique 14 de la pièce de bord 4 de sorte que l'élément de garnissage 1 présente une surface extérieure, formée au moins en partie par la surface externe 12 de la pièce de bord 4 et par la zone d'affichage 20, sensiblement continue. Plus particulièrement, l'élément transparent 18 et l'ouverture de la pièce de bord 4 sont par exemple ajustés l'un à l'autre de sorte que la surface extérieure de l'élément de garnissage est sensiblement ininterrompue au niveau de la transition entre la surface externe 12 de la zone périphérique 14 et la zone d'affichage 20. En d'autres termes, le ou les bords de l'ouverture de la pièce de bord sont accolés au(x) bord(s) de l'élément transparent 18. Encore en d'autres termes, l'ouverture de la pièce de bord 4 présente une forme sensiblement complémentaire de celle de l'élément transparent 18. On notera que l'élément transparent 18 peut avoir toute forme appropriée correspondant par exemple à la forme de l'écran 16. Ainsi, l'élément transparent 18 peut être sensiblement rectangulaire, rectangulaire à coins arrondis, oblong, circulaire ou autre. On notera également que l'invention n'est pas limitée à une surface extérieure de l'élément de garnissage plane. Ainsi, la zone d'affichage 20 peut être par exemple légèrement bombée ou incurvée. Dans ce cas, par « la zone d'affichage 20 s'étend sensiblement dans le même plan que la zone périphérique 14 de la pièce de bord 4 », on entend que la zone périphérique 14 suit sensiblement la même incurvation que la zone d'affichage 20 afin que la surface extérieure de l'élément de garnissage 1 présente une continuité au niveau de la transition entre la zone périphérique 14 et la zone d'affichage 20. Ainsi, selon un exemple, la zone périphérique 14 présente par exemple un rayon de courbure sensiblement égal à celui de la zone d'affichage 20.

En ayant une surface extérieure sensiblement continue et ininterrompue entre la pièce de bord 4 et la zone d'affichage 20, on confère à l'élément de garnissage un aspect particulièrement satisfaisant renforçant l'impression d'intégration du dispositif d'affichage 6 dans l'élément de garnissage 1. Afin d'améliorer encore cette impression, il peut être envisagé de teindre l'élément transparent 18 ou d'ajouter un film coloré sur la zone d'affichage 20 afin que l'élément transparent 18 présente le même aspect que la pièce de bord 4, notamment lorsque le dispositif d'affichage est éteint et n'est pas éclairé par le dispositif d'éclairage 8, comme cela sera décrit ultérieurement. Ainsi, dans le cas d'une pièce de bord 4 noire, l'élément transparent 18 peut par exemple être fumé de sorte que, vu de l'extérieur, la présence du dispositif d'affichage 6 soit peu ou pas visible par rapport au reste de l'élément de garnissage 1 lorsque le dispositif d'éclairage 8 n'est pas activé. Si un film coloré est appliqué sur la surface externe 25 de l'élément transparent 18, alors c'est la face externe de ce film qui forme la zone d'affichage 20 et qui s'étend dans la continuité de la surface externe 12 de la zone périphérique 14.

Selon un mode de réalisation, une ou plusieurs zones de l'élément transparent 18 peuvent être texturées pour former une ou plusieurs zones de signalement, par exemple en complément des zones de signalement 15 prévues dans la zone périphérique 14. L'élément transparent 18 peut par exemple être soumis à un rayonnement laser pour créer une micro-texturation dans une ou plusieurs zones de la surface interne 24 et/ou de la surface externe 25 de l'élément transparent 18 et ainsi créer un ou plusieurs motifs, définissant par exemple des pictogrammes, sur la zone d'affichage, ces motifs apparaissant lorsque la zone d'affichage est éclairée. Le rayonnement laser permet de modifier les caractéristiques tribologiques de l'élément transparent 18 afin de créer des zones de retour haptique passif sur la zone d'affichage 20, la transition entre ces zones et le reste de la zone d'affichage 20 étant sensiblement invisible à l'œil nu depuis l'extérieur de l'élément de garnissage 1.

Selon un mode de réalisation, l'écran 16 présente des dimensions supérieures à celles de l'élément transparent 18 de sorte qu'une partie, notamment un ou plusieurs bords, de l'écran 16 s'étend en regard d'une partie de la zone périphérique 14 de la pièce de bord. Selon ce mode de réalisation, les images générées par cette partie de l'écran 16 s'affichent ainsi sur la surface externe 12 d'une partie de la zone périphérique 14, comme cela sera décrit plus en détail ultérieurement.

Le dispositif d'éclairage 8 est agencé pour éclairer le dispositif d'affichage 6 et la zone périphérique 14 de la pièce de bord 4 lorsqu'il est activé. En d'autres termes, le dispositif d'éclairage 8 n'éclaire pas seulement le dispositif d'affichage 6 comme c'est habituellement le cas mais il éclaire également une zone s'étendant autour du dispositif d'affichage 6. A cet effet, le dispositif d'éclairage 8 comprend une nappe lumineuse 28 s'étendant en regard du dispositif d'affichage 6 et de la zone périphérique 14 de la pièce de bord 4 et agencé pour émettre de la lumière vers la zone d'affichage 20 et la surface externe 12 de la zone périphérique 14. En d'autres termes, la même nappe lumineuse s'étend au moins en regard de la zone d'affichage 20 et de la zone périphérique 14. Plus particulièrement, la nappe lumineuse 28 s'étend du côté de la face interne de l'écran 16 et ferme l'ouverture du corps 2 à l'opposé de la pièce de bord 4, comme représenté sur les Figs. 2 et 3. En d'autres termes, la nappe lumineuse 28 s'étend sur l'envers de l'écran 16 et de la partie du support 10 s'étendant en regard de la zone périphérique 14 de sorte que la lumière émise par la nappe lumineuse 28 traverse l'écran 16 et cette partie du support 10 avant d'atteindre la surface extérieure de l'élément de garnissage, la même nappe lumineuse 28 illuminant à la fois la zone d'affichage 20 et la zone périphérique 14.

Ainsi, la lumière émise par la nappe lumineuse 28 traverse l'ensemble de l'écran 16 ainsi que la zone périphérique 14, par exemple en passant au travers de l'écran 16 pour la partie de celui-ci qui s'étend en regard de la zone périphérique et en passant par le support 10 qui est alors agencé pour laisser passer la lumière pour éclairer une partie de la zone périphérique 14 qui ne s'étend pas en regard de l'écran 16 pour y afficher d'autres images, comme cela sera décrit ultérieurement et/ou pour créer un éclairage d'ambiance donnant une impression de surface d'affichage agrandie au-delà de la zone d'affichage 20 de l'élément transparent en lui-même. Plus particulièrement, la nappe lumineuse 28 peut être utilisée pour rendre la transition entre la zone d'affichage et la surface externe 12 de la zone périphérique 14 sensiblement invisible à l'œil nu depuis l'extérieur de l'élément de garnissage lorsque la nappe lumineuse est activée en éclairant de façon continue la zone d'affichage 20 et la zone périphérique 14 et en choisissant une lumière émise adaptée à cet effet.

Un tel éclairage de la surface extérieure de l'élément de garnissage 1 est particulièrement avantageux en ce qu'il donne une impression de grande zone d'affichage alors que le dispositif d'affichage 6 peut présenter un encombrement réduit, réduisant ainsi les coûts de production de l'élément de garnissage et libérant de la place pour d'autres fonctions, comme cela sera décrit ultérieurement. En outre, en rendant la transition entre la zone périphérique 14 et la zone d'affichage 20 sensiblement invisible, on améliore l'impression d'intégration du dispositif d'affichage 6 dans l'élément de garnissage, ce qui confère à celui-ci un aspect particulièrement satisfaisant.

Selon un mode de réalisation, le dispositif d'éclairage 8 comprend au moins un guide de lumière 30 s'étendant en saillie de la nappe lumineuse 28 et amenant la lumière émise par ladite nappe lumineuse 28 sur au moins une partie de la zone périphérique 14 de la pièce de bord. Ce guide de lumière 30 est par exemple utile dans le cas où l'écran 16 comprend une bordure opaque 22 empêchant la lumière émise par la nappe lumineuse 28 de passer au travers de l'écran 16 dans cette bordure. Le guide de lumière 30 amène alors la lumière émise par cette nappe 28 en regard de la bordure opaque 22 entre l'écran 16 et la zone périphérique 14 de la pièce de bord 4, comme représenté sur la Fig. 3. En variante ou en complément, le guide de lumière 30 peut également amener la lumière en regard d'une partie de la zone d'affichage 20. Le guide de lumière 30 est par exemple réalisé en un matériau transparent. Le guide de lumière 30 comprend par une exemple une première branche 32, s'étendant en saillie de la nappe lumineuse 28 le long d'un bord de l'écran 16 de la face interne à la face externe de celui-ci, et une deuxième branche 34 s'étendant à partir de l'extrémité de la première branche 32 opposée à la nappe lumineuse 28 sur la bordure opaque 22 de l'écran 16. La deuxième branche 34 est agencée pour émettre la lumière qu'il reçoit vers la surface extérieure de l'élément de garnissage 1. Ainsi, la présence d'une bordure opaque 22 n'interrompt pas la continuité de l'illumination de la surface extérieure de l'élément de garnissage 1.

La nappe lumineuse 28 est par exemple formée par une nappe de diodes électroluminescentes. Ainsi, la nappe lumineuse 28 comprend une pluralité de diodes électroluminescentes (non représentées) formant une matrice de diodes électroluminescentes. La matrice de diodes définit une pluralité de sous-matrices de diodes qui peuvent être activées indépendamment les unes des autres et/ou qui peuvent chacune émettre un signal lumineux identique et/ou différent des signaux lumineux émis par les autres sous-matrices. En d'autres termes, la nappe lumineuse 28 peut être pilotée pour émettre différents types de signaux lumineux dans différentes zones de celle-ci. Par signaux lumineux différents, on entend des couleurs différentes et/ou des intensités lumineuses différentes. Ainsi, la lumière éclairant la zone d'affichage 20 n'est pas nécessairement la même que la lumière éclairant la zone périphérique 14 et ces lumières peuvent être modulées, notamment pour rendre la transition entre la zone d'affichage 20 et la zone périphérique 14 sensiblement invisible à l'œil nu depuis l'extérieur de l'élément de garnissage 1 ou pour créer des effets lumineux, telles que des animations, sur la surface extérieure de l'élément de garnissage 1. Ainsi, à titre d'exemple, la lumière éclairant la transition entre la zone d'affichage 20 et la zone périphérique 14 et la lumière éclairant le reste de la zone périphérique peuvent être agencées pour créer un effet de fondu sur la surface extérieure de l'élément de garnissage de sorte à créer une transition harmonieuse entre la partie de la surface extérieure de l'élément de garnissage éclairée et la partie de la surface extérieure non éclairée.

Selon un mode de réalisation, la nappe lumineuse 28 est commandée pour qu'une première zone de la nappe lumineuse 28, s'étendant sensiblement en regard de la zone d'affichage 20, émette un premier signal lumineux et qu'une deuxième zone de la nappe lumineuse 28, s'étendant en regard de la zone périphérique 14, émette un deuxième signal lumineux différent du premier signal lumineux. Le deuxième signal lumineux présente par exemple une première luminosité, faible ou nulle, dans un état de repos de la deuxième zone lumineuse, et une deuxième luminosité, supérieure à la première luminosité, lorsque la deuxième zone est commandée pour être dans un état activé. L'état de repos est utilisé pour masquer ce qui s'étend sous la zone périphérique 14 de l'extérieur de l'élément de garnissage malgré la translucidité de la zone périphérique 14 tandis que l'état activé est utilisé pour illuminer la zone périphérique 14 tel que décrit précédemment, par exemple pour étendre la zone d'affichage 20.

En outre, la lumière émise par certaines sous matrices de diodes est utilisée pour éclairer la ou les zones de signalement 15 prévues dans la zone périphérique 14 et/ou la zone d'affichage 20 par exemple pour signaler qu'une fonction du véhicule a été activée ou est activable, par exemple par contact tactile avec la zone de signalement 15 illuminée. Ainsi l'éclairage d'une zone de signalement 15 signale par exemple à un utilisateur qu'une fonction peut être activée, désactivée et/ou contrôlée par contact tactile avec cette zone de signalement. Les fonctions concernées sont par exemple des fonctions liées au véhicule, au dispositif d'affichage 6 et/ou à un appareil connecté au véhicule, tel qu'un téléphone portable ou autre. De même il peut être prévu de modifier l'éclairage de la zone de signalement 15, par exemple en modifiant la couleur de la lumière éclairant cette zone, pour indiquer un changement d'état de la fonction. Selon un mode de réalisation la ou les zones de signalement 15 sont sensiblement invisibles à l'œil nu depuis l'extérieur de l'élément de garnissage lorsque la fonction liée à cette zone n'est pas activable et/ou n'est pas activée, par exemple en illuminant ces zones de signalement 15 avec une lumière identique que la lumière éclairant le reste de la surface extérieure. Ainsi, les informations affichées sur la surface extérieure de l'élément de garnissage sont modulables et les pictogrammes ou icônes n'apparaissent que lorsque cela est pertinent en étant éclairés d'une façon particulière par la nappe lumineuse 28. Ainsi, à titre d'exemple, le film capacitif s'étendant sur la pièce de bord 4 définit au moins un bouton tactile sur la zone périphérique 14 et ce bouton tactile n'est actionnable que lorsque la zone périphérique 14 est éclairée par la nappe lumineuse 28

Lorsqu'une partie des images générées par l'écran 16 sont affichées sur la zone périphérique 14, comme cela a été décrit auparavant, ces images peuvent être du même type que celles affichées sur la zone d'affichage 20 afin de créer une surface d'affichage agrandie et/ou être d'un type différent par exemple pour former des icônes ou des pictogrammes sur la zone périphérique afin de créer des zones de signalement supplémentaires.

La nappe lumineuse 28 est par exemple flexible et déformable de sorte que sa forme peut s'adapter à son environnement dans l'élément de garnissage, comme plus particulièrement visible sur la Fig. 2. En effet, une telle nappe lumineuse 28, par exemple formée par une matrice de diodes, peut être particulièrement fine (son épaisseur est par exemple sensiblement comprise entre 1 mm et 5 mm, de préférence, entre 2 mm et 3 mm), ce qui la rend peu encombrante, souple et à même d'adopter la forme souhaitée. Ainsi, la nappe lumineuse 28 peut épouser la forme de l'envers de l'écran 16 et de la partie du support 10 contre laquelle elle est appliquée et ainsi assurer une bonne transmission de la lumière dans ces éléments.

Comme décrit précédemment, une même nappe lumineuse 28 éclaire la zone d'affichage 20 et la zone périphérique 14, mais il est entendu que l'élément de garnissage 1 peut comprendre d'autres nappes lumineuses ou d'autres éléments d'éclairage, par exemple pour éclairer des zones en dehors de la zone d'affichage 20 et de la zone périphérique 14.

La nappe lumineuse 28 est commandée par une seule unité de contrôle 36. En d'autres termes, une même unité de contrôle 36 gère l'éclairage de la zone d'affichage 20 et celui de la zone périphérique. De façon avantageuse, le pilotage du dispositif d'affichage 6 et du dispositif d'éclairage 8 peut être effectué par la même unité de contrôle 36, par exemple formée par une seule carte de circuits imprimés, s'étendant par exemple sur l'envers le nappe lumineuse 28, comme représenté sur la Fig .2. L'utilisation d'une seule unité de contrôle 36 permet de réduire encore l'encombrement du dispositif d'affichage 6 et du dispositif d'éclairage 8 dans l'élément de garnissage et ainsi de libérer de l'espace pour l'intégration d'autres fonctionnalités dans l'élément de garnissage, telles que des zones chauffantes, des boutons de commande ou autre.

L'élément de garnissage décrit ci-dessus permet l'intégration d'un dispositif d'affichage 6, de façon harmonieuse, peu encombrante et économique, avec le reste de l'élément de garnissage en éclairant une zone de la surface externe de la pièce de bord 4 s'étendant autour de la zone d'affichage 20 avec la même nappe lumineuse 28 que celle utilisée pour éclairer l'écran 16 du dispositif d'affichage 6. Ainsi, les dimensions du dispositif d'affichage 6 peuvent être réduites tout en conservant une zone d'affichage satisfaisante s'étendant à la fois sur la zone d'affichage 20 et sur la zone périphérique 14 s'étendant autour de zone d'affichage 20.

## Revendications

1. Elément de garnissage (1) comprenant une zone d'affichage (20) définie par un dispositif d'affichage (6), et une pièce de bord (4) comprenant une zone périphérique (14) s'étendant autour d'au moins une partie de la zone d'affichage (20), ladite zone périphérique (14) étant au moins en partie translucide, ladite zone d'affichage (20) et ladite zone périphérique (14) formant au moins une partie d'une surface extérieure de l'élément de garnissage, l'élément de garnissage comprenant en outre un dispositif d'éclairage (8) agencé pour éclairer le dispositif d'affichage (6) afin d'afficher des images sur la zone d'affichage (20), **caractérisé en ce que** le dispositif d'éclairage (8) comprend une nappe lumineuse (28) s'étendant au moins en regard de la zone d'affichage (20) et de la zone périphérique (14) de la pièce de bord (4).

2. Elément de garnissage (1) selon la revendication 1, dans lequel la nappe lumineuse (28) est commandée par une unité de contrôle (36) adaptée pour commander ladite nappe lumineuse (28) pour qu'une première zone de ladite nappe lumineuse (28), s'étendant sensiblement en regard de la zone d'affichage (20), émette un premier signal lumineux et qu'une deuxième zone de ladite nappe lumineuse (28), s'étendant en regard de la zone périphérique, émette un deuxième signal lumineux différent du premier signal lumineux, ledit deuxième signal lumineux présentant une première luminosité, faible ou nulle, dans un état de repos de ladite deuxième zone lumineuse, et une deuxième luminosité, supérieure à la première luminosité, lorsque l'unité de contrôle (36) active ladite deuxième zone dans un état activé.

3. Elément de garnissage selon la revendication 1, dans lequel la zone d'affichage (20) comprend un élément transparent (18) comprenant une surface externe (225) et une surface interne (24), opposée à la surface externe et tournée vers le dispositif d'affichage (6), la surface externe (25) de l'élément transparent (18) s'étendant sensiblement dans le même plan que la zone périphérique (14) de la pièce de bord (4), l'élément de garnissage présentant une surface extérieure sensiblement continue et ininterrompue au niveau de la transition entre la zone d'affichage (20) et la zone périphérique (14).

4. Elément de garnissage selon la revendication 3, dans lequel la pièce de bord (4) délimite une ouverture recevant l'élément transparent (18).

5. Elément de garnissage selon la revendication 2, dans lequel la nappe lumineuse (28) est agencée pour émettre une lumière rendant sensiblement invisible à l'œil nu la transition entre la surface d'affichage (20) et la zone périphérique (14) depuis l'extérieur de l'élément de garnissage lorsque la nappe lumineuse (28) est activée.

6. Elément de garnissage selon la revendication 3 ou 4, dans lequel l'élément transparent (18) et la pièce de bord (4) sont réalisés dans des matériaux différents.

7. Elément de garnissage selon l'une quelconque des revendications 1 à 6, dans lequel la zone périphérique (14) et/ou la zone d'affichage (20) comprennent au moins une zone de signalement (15) formant un pictogramme et/ou désignant une zone activable par contact avec ladite zone activable.

8. Elément de garnissage selon l'une quelconque des revendications 1 à 7, dans lequel la pièce de bord (4) comprend au moins un film capacitif s'étendant en regard d'au moins la zone périphérique (14), ledit film capacitif définissant au moins un bouton tactile sur ladite zone périphérique (14), ledit bouton tactile n'étant actionnable que lorsque ladite zone périphérique (14) est éclairée par la nappe lumineuse (28).

9. Elément de garnissage selon l'une quelconque des revendications 1 à 8, dans lequel le dispositif d'affichage (6) comprend un écran (16) s'étendant en regard de la zone d'affichage (20), ledit écran (16) étant maintenu par un support (10) comprenant au moins une partie s'étendant en regard de la zone périphérique (14), la nappe lumineuse (28) s'étendant sur l'envers dudit écran (16) et de ladite partie du support (10) de sorte que la lumière émise par ladite nappe lumineuse (28) traverse l'écran (16) et la partie du support (10) avant d'atteindre la surface extérieure de l'élément de garnissage.

10. Elément de garnissage selon la revendication 9, dans lequel le dispositif d'éclairage (8) comprend au moins un guide de lumière (30) s'étendant en saillie de la nappe lumineuse (28) et amenant la lumière émise par ladite nappe lumineuse (28) sur au moins une partie de la zone périphérique (14) de la pièce de bord.

11. Elément de garnissage selon l'une quelconque des revendications 1 à 10, dans lequel la nappe lumineuse (28) comprend une pluralité de diodes électroluminescentes formant une matrice de diodes électroluminescentes définissant plusieurs sous matrices de diodes, chaque sous-matrice étant activable indépendamment des autres sous-matrices.

12. Elément de garnissage selon l'une quelconque des revendications 1 à 11, dans lequel la nappe lumineuse (28) est flexible et déformable de sorte à pouvoir épouser la forme de l'élément de garnissage.

13. Elément de garnissage selon l'une quelconque des revendications 1 à 12, dans lequel le dispositif d'affichage (6) et le dispositif d'éclairage (8) sont pilotés par une même unité de contrôle (36).

14. Elément de garnissage selon l'une quelconque des revendications 1 à 13, dans lequel l'élément de garnissage est un module d'affichage.
